# EUROPÄISCHE PATENTSCHRIFT

(11) **EP 0 822 512 B1**
(45) Veröffentlichungstag und Bekanntmachung des Hinweises auf die Patenterteilung: **13.09.2006**
(21) Anmeldenummer: 97112775.8
(22) Anmeldetag: 24.07.1997
(51) Int. Cl.: G06K 19/077, G06K 19/00, G06K 7/08, H05K 1/18

(54) **Kontaktlose Chipkarte sowie Verfahren zur Herstellung kontaktloser Chipkarten**
Contactless chip card and method for their production
Carte à puce sans contact et procédé de production

(30) Priorität: 31.07.1996 DE 19630947
(43) Veröffentlichungstag der Anmeldung: 04.02.1998
(73) Patentinhaber: Gemplus GmbH, 70794 Filderstadt (DE)
(72) Erfinder: Schmidt, Frank, Dr., 99891 Fischbach (DE)
(74) Vertreter: Grünecker, Kinkeldey, Stockmair & Schwanhäusser Anwaltssozietät

(56) Entgegenhaltungen:
- EP-A2- 0 595 549
- EP-A2- 0 671 705
- EP-A2- 0 682 321
- DE-A1- 4 337 921
- FR-A1- 2 686 999
- GB-A- 2 279 611

## Beschreibung

Die vorliegende Erfindung betrifft kontaktlose Chipkarten sowie die Herstellung kontaktloser Chipkarten.

Bei der Fertigung kontaktloser Karten hat sich insbesondere das Prinzip der induktiven Kopplung durchgesetzt. Derartige Karten weisen eine in das Innere des Kartenkörpers eingebrachte Spule auf, die zur Erzielung einer maximalen Leistungsaufnahme, vorzugsweise entlang des Kartenrandes, gewickelt ist.

Bekannterweise ist für die Höhe der erzielbaren Induktivität die verwendete Windungszahl von besonderer Bedeutung, da diese quadratisch in die Gesamtinduktivität einfließt.

Zur Erzielung einer guten induktiven Kopplung ist eine hohe Windungszahl somit wünschenswert.

Da die Kartendicke durch Normung auf etwa 0,76 mm festgelegt ist und der Spulendraht für eine problemlose Verarbeitung eine gewisse Mindeststärke aufweisen muß, beispielsweise mehr als 50 µm, kann die Windungszahl und somit die erzielbare Gesamtinduktivität nicht beliebig erhöht werden.

Aus der EP-A-0554581 ist eine flexible Antenne für einen Transponder bekannt, bei der eine Antennenspule um einen Block aus Kunstharz gewickelt wird, wobei in den Kunstharzblock kleine Ferritpartikel eingebracht sind.

Es ist daher die Aufgabe der vorliegenden Erfindung, eine Lösung anzugeben, durch die kontaktlose Chipkarten herstellbar sind, bei denen der Spulendraht einen noch problemlos zu verarbeitenden Durchmesser aufweist und die dennoch eine ausreichende induktive Kopplung gewährleistet ist.

Diese Aufgabe wird in erfindungsgemäßer Weise durch die Gegenstände der Patentansprüche 1 und 9 gelöst.

Bevorzugte Ausgestaltungen der vorliegenden Erfindung sind Gegenstand der Unteransprüche.

Die vorliegende Erfindung baut zunächst auf der Erkenntnis auf, daß es bei kontaktlosen Karten mit induktiver Kopplung vorteilhaft ist, in den Kernbereich der Spule einen magnetisierbaren Stoff mit hoher Permeabilitätszahl einzubringen, um dadurch gegenüber Luftspulen bei gleichbleibender Windungszahl die Gesamtinduktivität zu erhöhen.

Der vorliegenden Erfindung liegt weiterhin die Erkenntnis zugrunde, daß es aufgrund der Biegebeanspruchungen von Chipkarten nicht möglich ist, hierfür großflächige Ferritplättchen, die in die Karte eingebracht werden, vorzusehen, da diese während der normalen Benutzung der Chipkarte brechen würden.

Gemäß der vorliegenden Erfindung ist daher vorgesehen, statt eines homogenen Ferritkörpers als Spulenkern lediglich Ferritpartikel (oder allgemein magnetisierbare Partikel) in eine Kunststoffmasse einzubringen, um dadurch einen Spulenkern zu schaffen, der trotz einer erhöhten Permeabilität eine ausreichende Flexibilität besitzt.

Gemäß einer alternativen Variante der vorliegenden Erfindung ist vorgesehen, zwar ein Ferritplättchen als Spulenkern zu verwenden, dieses in seinen Abmessungen jedoch so gering zu machen und so innerhalb der Karte zu plazieren, daß es den normalen Biegebeanspruchungen der Karte widersteht. Durch Wahl eines magnetisierbaren Stoffes mit sehr hoher Permeabilitätszahl kann die Windungsfläche der Spule entsprechend verkleinert werden, so daß die Spule nicht mehr entlang des Kartenrandes verläuft, sondern nur noch einen verhältnismäßig kleinen Abschnitt der Karte abdeckt. Vorzugsweise wird diese flächenmäßig kleine Spule zusammen mit dem im Spuleninneren vorhandenen Ferritplättchen im Randbereich der Karte plaziert, da dort die Biegebeanspruchungen am geringsten sind.

Im folgenden werden bevorzugte Ausführungsformen der vorliegenden Erfindung unter anderem unter Bezugnahme auf die beiliegenden Zeichnungen näher erläutert. Dabei zeigen die Zeichnungen im einzelnen:
Fig. 1 eine schematische Ansicht einer kontaktlosen Chipkarte zur Erläuterung einer ersten bevorzugten Ausführungsform der vorliegenden Erfindung, und
Fig. 2 eine schematische Ansicht einer Chipkarte zur Erläuterung einer zweiten bevorzugten Ausführungsform der vorliegenden Erfindung.

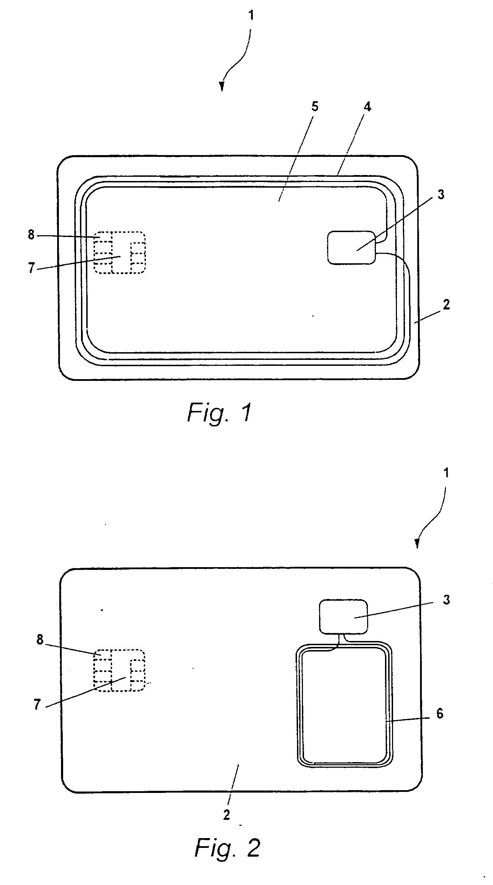

Fig. 1 zeigt in schematischer Weise eine kontaktlose Chipkarte 1, bestehend aus einem Kartenkörper 2, einem in den Kartenkörper eingebrachten Chipmodul 3 sowie einer in der Nähe des Kartenrandes verlaufenden Spule 4.

Die Spule 4 dient zur Energieaufnahme mittels induktiver Kopplung für den im Chipmodul 3 enthaltenen Chip.

Aus fertigungstechnischen Gründen beträgt der Spulendrahtdurchmesser vorzugsweise mehr als 50 µm. Aufgrund einer vorgegebenen Kartendicke ist daher die-mögliche Windungszahl der Spule begrenzt. In erfindungsgemäßer Weise wird daher zumindest in das Spuleninnere 5 des Kartenkörpers ein Material eingebracht, das eine hohe Permeabilitätszahl aufweist. Um die Chipkarte 1 weiterhin ausreichend biegsam fertigen zu können, ist vorgesehen, Partikel eines magnetisierbaren Stoffes mit hoher Permeabilitätszahl, vorzugsweise Ferritpartikel, in den Kunststoff, durch den der Kernbereich der Karte gebildet wird, einzubringen. Vorzugsweise besteht eine durchgängige Zwischenschicht des Kartenkörpers 2 aus einem Kunststoffmaterial, das mit Ferritpartikeln angereichert ist. Diese Zwischenschicht kann entweder durch Gießen, Spritzen oder Spritzpressen gefertigt werden. Vorzugsweise wird die mit den Ferritpartikeln angereicherte Zwischenschicht anschließend mit Deckschichten verschlossen, um ein einwandfreies Bedrucken der Karte zu gewährleisten. Das Chipmodul 3 wird vorzugsweise in eine Aussparung im fertiggestellten Kartenkörper eingeklebt, es kann jedoch auch während der Erstellung des Kartenkörpers in diesen integriert werden.

Fig. 2 zeigt eine alterntive Ausführungsform für die erfindungsgemäße kontaktlose Chipkarte. Bei der Ausführungsform gemäß Fig. 2 überdeckt die Spule 6 nurmehr einen geringen Teil des gesamten Kartenkörpers. Die Verringerung der Windungsfläche führt zwangsläufig zu einer verringerten Induktivität. Durch das erfindungsgemäße Einbringen eines Spulenkerns mit hoher Permeabilitätszahl kann diese Induktivitätserniedrigung jedoch mehr als ausgeglichen werden. Wenn die Spule 6 ausreichend klein gefertigt wird, kann der Spulenkern auch aus einem relativ starren Ferritkörper bestehen, insbesondere dann, wenn die Spule mit dem Spulenkern im Randbereich der Karte, wo die Biegebeanpsruchungen am geringsten sind, angeordnet wird. Vorzugsweise ist jedoch auch bei der Ausführungsform gemäß Fig. 2 der Spulenkern aus einem Kunststoff gefertigt, in den magnetisierbare Partikel, vorzugsweise Ferritpartikel, eingebracht sind.

Wie in Zusammenhang mit der Fig. 1 erläutert, kann der mit den magnetisierbaren Partikeln angereicherte Spulenkern durch Spritzen, Gießen oder Spritzpressen hergestellt werden. Der Kern kann dabei auch zunächst entsprechend den erwähnten Verfahren hergestellt und anschließend mit Spulendraht umwickelt werden. Alternativ kann die Spule während des Gießens des Kerns mitvergossen werden. Bei der Lösungsmöglichkeit gemäß Fig. 2 wird somit zunächst ein Spulenmodul gefertigt, das dann in den Kartenkörper 2 eingebracht wird. Bei einer derartigen Lösungsmöglichkeit kann das für den Spulenkern verwendete Kunststoffmaterial sich von dem in der gleichen Ebene anschließenden Kunststoffmaterial unterscheiden. Beispielsweise kann das Spulenmodul mittels Gießen erzeugt und anschließend umspritzt werden, um somit den Kartenkörper 2 mit dem darin enthaltenen Spulenmodul zu erzeugen.

Wie bei der Ausführungsform gemäß Fig. 1, kann das Chipmodul 3 nach Fertigstellung des Kartenkörpers oder bereits während der Erstellung des Kartenkörpers integriert werden. Wird der Spulenkern mittels Spritztechnik erstellt, so wird hierzu vorzugsweise ein ferritgefüllter Thermoplast verwendet. Wird dagegen Spritzpressen angewandt, so wird hierfür vorzugsweise eine ferritgefüllte Duroplastmasse verwendet.

Wie durch Vergleich der Fig. 1 und 2 ersichtlich ist, kann sich das Chipmodul 3 innerhalb oder außerhalb des Spuleninneren befinden.

Wie die Fig. 1 und 2 weiter zeigen, kann zusätzlich zu dem Chipmodul 3 ein weiteres Chipmodul 7 auf der Karte vorhanden sein, das in herkömmlicher Weise über Kontakte 8 kontaktiert wird. Eine Karte mit einem Chipmodul 3 als auch einem Chipmodul 7 kann somit sowohl für Terminals verwendet werden, bei denen die Kommunikation über elektrische Kontakte erfolgt als auch für solche Terminals, bei denen eine Kommunikation kontaktlos abläuft. Bevorzugterweise ist jedoch das Chipmodul 7 identisch mit dem Chipmodul 3, d.h. es wird ein Chip verwendet, der sowohl kontaktlos als auch über Kontakte kommunizieren kann. In diesem Fall entfällt also das Chipmodul 7 und das Chipmodul 3 weist dafür zusätzlich Kontakte 8 auf.

Wie oben erwähnt und in den Zeichnungen dargestellt, verläuft die Wicklung der Spule um eine Achse, die senkrecht zur Chipkartenfläche steht. Vorzugsweise verläuft die Spule, die als Drahtspule oder gedruckte Spule ausgeführt sein kann, entlang des Kartenrandes.

## Patentansprüche

1. Kontaktlose Chipkarte (1) mit einem Kartenkörper (2) sowie einem Chipmodul(3) und einer Spule (6), die in den Kartenkörper eingebracht sind, wobei die Spule um eine Achse gewickelt ist, die senkrecht zur Kartenebene steht, **dadurch gekennzeichnet, daß** zumindest der von der Spule (6) umschlossene Teil des Kartenkörpers zumindest abschnittsweise und in der Ebene der Spule mit magnetisierbaren Partikeln, vorzugsweise Ferritpartikeln, angereichert ist, oder dass ein Ferritplättchen in den von der Spule umschlossenen Teil in die Ebene der Spule eingebracht ist.

2. Kontaktlose Chipkarte nach Anspruch 1, **dadurch gekennnzeichnet**, daß die Ferritpartikel nur in einer Zwischenschicht des Kartenkörpers vorhanden sind, nicht jedoch in den beiden Deckschichten der Karte.

3. Kontaktlose Chipkarte nach Anspruch 1 oder 2, **dadurch gekennnzeichnet**, daß die Ferritpartikel im wesentlichen über die gesamte Kartenebene verteilt angeordnet sind.

4. Kontaktlose Chipkarte nach Anspruch 1 oder 2, **dadurch gekennnzeichnet**, daß die Ferritpartikel nur über einen begrenzten Abschnitt der Kartenebene verteilt sind und dieser begrenzte Abschnitt aus einem Kunststoffmaterial besteht, das sich vom Material der angrenzenden Kartenabschnitte unterscheidet.

5. Kontaktlose Chipkarte nach einem der vorhergehenden Ansprüche, **dadurch** ge**kennnzeichnet,** daß zwischen der Spule (6) und dem mit Ferritpartikeln durchsetzten Bereich ein ferritfreier Massespalt besteht.

6. Kontaktlose Chipkarte nach einem der vorhergehenden Ansprüche, **dadurch** gekennnzeichnet, daß das Modul (3) außerhalb des von der Spule umschlossenen Bereichs angeordnet ist.

7. Kontaktlose Chipkarte nach Anspruch 1, **dadurch gekennnzeichnet**, **daß** das Ferritplättchen aus einer dünnen Folie besteht.

8. Kontaktlose Chipkarte nach Anspruch 1 oder 7, **dadurch gekennnzeichnet**, **daß** das Ferritplättchen im Randbereich der Karte angeordnet ist.

9. Verfahren zur Herstellung einer kontaktlosen Chipkarte, enthaltend eine in der Kartenebene liegende und um eine senkrecht zur Kartenebene stehende Achse gewickelte Spule, **dadurch gekennnzeichnet,** daß die Herstellung das Einbringen eines Ferritplättchens oder magnetisierbarer Partikel in den von der Spule (6) umschlossenen und in der Ebene der Spule liegenden Abschnitt, umfaßt.

10. Verfahren nach Anspruch 9, **dadurch gekennnzeichnet, daß** der magnetisierbare Kern aus magnetisierbaren Partikeln, vorzugsweise Ferritpartikeln, besteht, die in eine Kunststoffmasse eingebettet sind.

11. Verfahren nach Anspruch 10, **dadurch gekennnzeichnet**, **daß** der magnetisierbare Kern gegossen wird, wobei die Spule (6) mitvergossen wird.

12. Verfahren nach Anspruch 11, **dadurch gekennnzeichnet, daß** der magnetisierbare Kern durch Spritzen mit ferritgefüllten Thermoplasten hergestellt wird.

13. Verfahren nach Anspruch 11, **dadurch gekennnzeichnet, daß** der magnetisierbare Kern durch Spritzpressen mit ferritgefüllten Duroplastmassen hergestellt wird.

14. Verfahren nach Anspruch 11, **dadurch gekennnzeichnet**, **daß** der magnetisierbare Kern vor Einbringen in den Kartenkörper mit der Spule umwickelt wird.

15. Verfahren nach Anspruch 11, **dadurch gekennnzeichnet**, **daß** die Spule in eine sich über die gesamte Karte erstreckende Zwischenschicht des Kartenkörpers eingebracht wird, wobei die Zwischenschicht aus einem Kunststoffmaterial besteht, das mit magnetisierbaren Partikeln, vorzugsweise Ferritpartikeln, angereichert ist.

## Claims

1. Contactless chip card (1) having a card body (2) as well as a chip module (3) and a coil (6) which are inserted into the card body, with the coil being wound about an axis which is vertical to the plane of the card, **characterised in that** at least the part of the card body enclosed by the coil (6), at least in sections, and in the plane of the coil, is enriched with magnetisable particles, preferably ferrite particles, or **in that** a ferrite lamina is inserted into the part enclosed by the coil into the plane of the coil.

2. Contactless chip card as claimed in Claim 1, **characterised in that** the ferrite particles are only provided in an intermediate layer of the card body, but not in the top two layers of the card.

3. Contactless chip card as claimed in Claim 1 or 2, **characterised in that** the ferrite particles are substantially distributed over the entire plane of the card.

4. Contactless chip card as claimed in Claim 1 or 2, **characterised in that** the ferrite particles are only distributed over a limited section of the plane of the card and this limited section consists of a plastic material which differs from the material of the adjoining card sections.

5. Contactless chip card as claimed in any one of the preceding claims, **characterised in that** a fissure of ferrite-free compound exists between the coil (6) and the area interspersed with ferrite particles.

6. Contactless chip card as claimed in any one of the preceding claims, **characterised in that** the module (3) is disposed outside the area enclosed by the coil.

7. Contactless chip card as claimed in Claim 1, **characterised in that** the ferrite lamina consists of a thin film.

8. Contactless chip card as claimed in Claim 1 or 7, **characterised in that** the ferrite lamina is disposed in the edge area of the card.

9. Method for the production of a contactless chip card, containing a coil located in the plane of the card and wound about an axis located vertically to the plane of the card, **characterised in that** the production includes the insertion of a ferrite lamina or magnetisable particles into the section enclosed by the coil (6) and located in the plane of the coil.

10. Method as claimed in Claim 9, **characterised in that** the magnetisable core consists of magnetisable particles, preferably ferrite particles, which are embedded into a plastic compound.

11. Method as claimed in Claim 10, **characterised in that** the magnetisable core is cast, with the coil (6) being cast as well.

12. Method as claimed in Claim 11, **characterised in that** the magnetisable core is produced by injection-moulding with ferrite-filled thermoplastics.

13. Method as claimed in Claim 11, **characterised in that** the magnetisable core is produced by transfer moulding with ferrite-filled thermoset plastic compounds.

14. Method as claimed in Claim 11, **characterised in that** the magnetisable core is wound around with the coil prior to insertion into the card body.

15. Method as claimed in Claim 11, **characterised in that** the coil is inserted into an intermediate layer of the card body extending over the entire card, with the intermediate layer comprising a plastic material which is enriched with magnetisable particles, preferably ferrite particles.

## Revendications

1. Carte à puce sans contact (1) avec un corps de carte (2) ainsi qu'un module de puce (3) et une bobine (6), qui sont montés dans le corps de carte, la bobine étant enroulée autour d'un axe, qui est perpendiculaire au plan de la carte, **caractérisée en ce qu'**au moins la partie du corps de carte entourée par la bobine (6) est enrichie au moins en partie et dans le plan de la bobine avec des particules magnétisables, de préférence des particules de ferrite, ou **en ce qu'**une plaquette de ferrite est placée dans le plan de la bobine dans la partie entourée par la bobine.

2. Carte à puce sans contact selon la revendication 1, **caractérisée en ce que** les particules de ferrite ne sont présentes que dans une couche intermédiaire du corps de carte, sans être toutefois dans les deux couches de couverture de la carte.

3. Carte à puce sans contact selon la revendication 1 ou 2, **caractérisée en ce que** les particules de ferrite sont disposées pour l'essentiel de manière répartie sur tout le plan de carte.

4. Carte à puce sans contact selon la revendication 1 ou 2, **caractérisée en ce que** les particules de ferrite ne sont réparties que sur une partie limitée du plan de carte, et cette partie limitée se compose d'un matériau en matière synthétique, qui se distingue du matériau des parties de carte limitrophes.

5. Carte à puce sans contact selon l'une des revendications précédentes, **caractérisée en ce qu'**entre la bobine (6) et la zone implantée de particules de ferrite existe un entrefer sans ferrite.

6. Carte à puce sans contact selon l'une des revendications précédentes, **caractérisée en ce que** le module (3) est disposé à l'extérieur de la zone entourée par la bobine.

7. Carte à puce sans contact selon la revendication 1, **caractérisée en ce que** la plaquette de ferrite se compose d'un film mince.

8. Carte à puce sans contact selon la revendication 1 ou 7, **caractérisée en ce que** la plaquette de ferrite est disposée dans la zone de bordure de la carte.

9. Procédé pour la fabrication d'une carte à puce sans contact, comprenant une bobine située dans le plan de carte et enroulée autour d'un axe perpendiculaire au plan de carte, **caractérisé en ce que** la fabrication comprend le montage d'une plaquette de ferrite ou de particules magnétisables dans la partie entourée par la bobine (6) et située dans le plan de carte de la bobine.

10. Procédé selon la revendication 9, **caractérisé en ce que** le noyau magnétisable se compose de particules magnétisables, de préférence de particules de ferrite, qui sont nichées dans la masse de matière synthétique.

11. Procédé selon la revendication 10, **caractérisé en ce que** le noyau magnétisable est moulé, la bobine (6) étant moulée avec.

12. Procédé selon la revendication 11, **caractérisé en ce que** le noyau magnétisable est fabriqué par injection de matières thermoplastiques chargées en ferrite.

13. Procédé selon la revendication 11, **caractérisé en ce que** le noyau magnétisable est fabriqué par injection de matières thermodurcissables chargées en ferrite.

14. Procédé selon la revendication 11, **caractérisé en ce que** le noyau magnétisable est entouré avec la bobine avant le montage dans le corps de carte.

15. Procédé selon la revendication 11, **caractérisé en ce que** la bobine est montée dans une couche intermédiaire du corps de carte s'étendant sur toute la carte, la couche intermédiaire se composant d'un matériau en matière synthétique, qui est enrichi en particules magnétisables, de préférence en particules de ferrite.
